# EUROPÄISCHE PATENTANMELDUNG

(11) **EP 3 280 017 A1**
(43) Veröffentlichungstag der Anmeldung: **07.02.2018**
(21) Anmeldenummer: 16183101.1
(22) Anmeldetag: 05.08.2016
(51) Int. Cl.: H02G 1/04, H02G 7/08, H02G 7/04

(54) **VERFAHREN UND SYSTEM ZUR AUFHÄNGUNG EINES LEITERSEILBÜNDELS**

(60) Teilanmeldung: 17197822.4
(71) Anmelder: SPIE SAG GmbH, 63225 Langen (DE)
(72) Erfinder: POHLMANN, Heinrich, 64390 Erzhausen (DE); SATTLER, Patrick, 55124 Mainz (DE)
(74) Vertreter: Kasseck, Christoph

(57) **Zusammenfassung**

Ein Rollenkasten umfasst zur Aufhängung von Leiterseilbündeln eine Achse, zwei Arme, einen Querträger und einen Seilhalter zur Halterung an einem bereits aufgehängten Seil. Der Seilhalter ist an den Querträger angeordnet und die Achse wird von den zwei Armen gehalten, wobei die Arme über den Querträger miteinander verbunden sind. Es sind wenigstens zwei Seilrollen auf der Achse angeordnet und der lichte Abstand zwischen den Seilrollen und dem Querträger bzw. dem Seilhalter beträgt wenigstens 5 cm, vorzugsweise wenigstens 7 cm und besonders vorzugsweise wenigstens 10 cm.

## Beschreibung

Die Erfindung betrifft ein Verfahren zur Aufhängung eines Leiterseilbündels, wobei zunächst an wenigstens einem zwischen zwei Masten bereits aufgehängten Seil eine Mehrzahl an Rollenkästen angeordnet wird, so dass sich die Rollenkästen über die Länge des bereits aufgehängten Seiles zwischen den Masten verteilen. Die Erfindung betrifft außerdem ein System zur Aufhängung eines Leiterseilbündels umfassend einen Rollenkasten und einen Ziehteppich zur Aufhängung eines Leiterseilbündels.

Ein Verfahren zur Aufhängung eines Leiterseiles ist bereits aus FR 2 778 505 A1 bekannt und wird im Folgenden als Rollenleinenverfahren bezeichnet. Das Rollenleinenverfahren verfolgt den Zweck, ein einzelnes Leiterseil innerhalb eines Spannfeldes zwischen zwei Masten oder über mehrere Spannfelder hinweg bodenfrei auszutauschen. Der Ausdruck "bodenfrei" meint, dass die Bodenstrecke zwischen den beiden Masten zwecks Seilaustausch nicht bzw. zum Teil nicht benutzt wird und insofern eine Berührung des Bodens weder durch das Leiterseil noch durch entsprechende Geräte bzw. Werkzeuge stattfindet. So können einzelne Seile von Spannfeldern ausgetauscht werden, welche Spannfelder beispielsweise Verkehrswege kreuzen oder aber über Gebäuden oder Wasserflächen liegen.

Im Rahmen des Rollenleinenverfahrens fährt eine Seillaufkatze entlang eines einzelnen, bereits aufgehängten und auszutauschenden Seiles. Die Seillaufkatze zieht ein verhältnismäßig dünnes und damit auch leichtes Tragseil, welches Tragseil in regelmäßigen Abständen von etwa 7 - 8 m an Seilhaltern von Rollenkästen befestigt ist. Die Rollenkästen wiederum gleiten über jeweils eine Rolle auf dem auszutauschenden Seil, so dass das Tragseil zunächst von der Seillaufkatze sowie von den Rollenkästen entlang des auszutauschenden Seiles getragen wird. Wenn die Seillaufkatze das Spannfeld vollständig überquert hat, wird die Seillaufkatze von dem auszutauschenden Seil abgenommen und von dem Tragseil getrennt.

Das im Verhältnis zum auszutauschenden Seil leichtere Tragseil wird sodann unter mechanische Zugspannung gesetzt, bis das Tragseil oberhalb des auszutauschenden Seiles verläuft, wodurch die Rollenkästen um 180° gedreht werden. Alternativ kann auch die Zugkraft im auszutauschenden Seil verringert werden. Nun liegen die Rollen der Rollenkästen nicht mehr auf dem auszutauschenden Seil, sondern es liegt nun das auszutauschende Seil auf den Rollen auf; das Tragseil erfüllt nun seine eigentliche Bestimmung und trägt das auszutauschende Seil.

Daraufhin wird das auszutauschende Seil mit einem neuen Seil verbunden und aus dem Spannfeld herausgezogen. Hierdurch wird zugleich das neue Seil in das Spannfeld hineingezogen und anschließend mit den Masten verbunden, wodurch der eigentliche Seiltausch durchgeführt wurde. Schließlich wird die auf das Tragseil einwirkende Zugkraft verringert, so dass das Tragseil unterhalb des neuen Seiles verläuft, wodurch die Rollenkästen sich erneut um 180° drehen und die Rollen nun auf dem neuen Seil aufliegen. Nun bietet das neue Seil im Spannfeld einen Halt für das Tragseil, welches in einem letzten Schritt über die auf dem neuen Seil gleitenden Rollen der Rollenkästen herausgezogen wird. Dieses Verfahren hat sich für die bodenfreie Aufhängung von einzelnen Seilen bewährt. Insbesondere wird dieses Rollenleinenverfahren für den Austausch von herkömmlichen Erdseilen durch Erdseile mit optischen Fasern verwendet.

Allerdings ist das Rollenleinenverfahren nur für den Austausch einzelner Seile geeignet. Sehr häufig aber werden im Falle von Freileitungen jenseits von 100 kV einzelne Phasen nicht über ein einzelnes Leiterseil, sondern über ein Leiterseilbündel aus zwei, drei oder vier einzelnen Leiterseilen geführt. Mittels des Rollenleinenverfahrens wäre es grundsätzlich möglich, einzelne Leiterseile eines Leiterseilbündels zu ersetzen. Dies aber ist ein entsprechend aufwendiger Vorgang, weil er zwei, drei- oder gar vierfach wiederholt werden muss. Folglich wäre es wirtschaftlich, wenn mittels des Rollenleinenverfahrens ein ganzes Leiterseilbündel aufgehängt würde.

Es wurde jedoch gefunden, dass dies mit dem Rollenleinenverfahren nicht möglich ist, weil die zwei, drei bzw. vier Leiterseile aufgrund der erforderlichen, zweifachen Drehung der Rollenkästen um 180° gleichermaßen verdreht werden müssten. Der Erfindung liegt daher das technische Problem zugrunde, die bodenfreie Aufhängung eines Leiterseilbündels wirtschaftlicher zu gestalten und insbesondere, ein ganzes Leiterseilbündel in einem einzelnen Durchgang bodenfrei aufzuhängen.

Zur Lösung dieses technischen Problems lehrt die Erfindung ein Verfahren zur Aufhängung eines Leiterseilbündels oder eines einzelnen Leiterseils, wobei zunächst an wenigstens einem zwischen zwei Masten bereits aufgehängten Seil eine Mehrzahl an Rollenkästen angeordnet wird, so dass sich die Rollenkästen über die Länge des bereits aufgehängten Seiles zwischen den Masten verteilen, wobei die Rollenkästen vorzugsweise den weiter unten beschriebenen, erfindungsgemäßen Rollenkästen entsprechen, wobei die Rollenkästen an dem bereits aufgehängten Seil festgeklemmt werden und danach das Leiterseilbündel oder das einzelne Leiterseil durch die Rollenkästen gezogen wird.

Der Erfindung liegt die Erkenntnis zugrunde, dass aufgrund der nicht mehr erforderlichen Drehungen der Seile ganze Leiterseilbündel auf einmal durch die Rollenkästen gezogen werden können, so dass hierdurch eine wirtschaftlichere, bodenfreie Aufhängung der Leiterseilbündel ermöglicht wird. Voraussetzung hierfür ist, dass wenigstens ein bereits aufgehängtes Seil vorhanden ist, an welchem die Rollenkästen festgeklemmt werden können. Die Festklemmung der Rollenkästen ist wesentlich, da die Rollenkästen ansonsten, insbesondere bei der Prozedur des Hindurchziehens des Leiterseilbündels, verrutschen könnten. Durch das erfindungsgemäße Verfahren kann ein ganzes Leiterseilbündel aufgehängt werden, doch fällt nun ein manueller Aufwand bezüglich der Anordnung und dem Entfernen der Rollenkästen an. Dabei liegt der Erfindung insbesondere die Erkenntnis zugrunde, dass trotz dieses manuellen Aufwandes das Verfahren zur Aufhängung von Leiterseilbündeln wirtschaftlicher geworden ist.

Unter dem Ausdruck "bereits aufgehängtes Seil" wird insbesondere jegliches bereits aufgehängte Seil verstanden, welches die Rollenkästen mitsamt des Leiterseilbündels tragen kann. Insbesondere meint dieser Begriff beispielsweise Leiterseile, Erdseile oder Seile mit lediglich mechanischer Funktion. Seile mit lediglich mechanischer Funktion können insbesondere diejenigen Seile sein, welche einer sehr großen Zugspannung unterliegen, wodurch mittels entsprechender Anknüpfung der Leiterseile ein deutlich geringerer Durchhang erreicht wird und wodurch die Masten deutlich kompakter gebaut werden können. Der Begriff "Rollenkasten" meint insbesondere einen Körper mit wenigstens zwei Seilrollen, wobei die Seilrollen vorzugsweise für Hochspannungsleiterseile ausgelegt sind. Der Rollenkasten ist zweckmäßigerweise so ausgebildet, dass wenigstens zwei (Hochspannungs-)Leiterseile hindurchgezogen werden können. Vorteilhafterweise umfasst der Rollenkasten wenigstens einen Seilhalter zum Halten des bereits aufgehängten Seiles.

Es liegt im Rahmen der Erfindung, dass das Leiterseilbündel an einen Ziehteppich, insbesondere an einen weiter unten beschriebenen erfindungsgemäßen Ziehteppich, angeschlossen wird, wobei vorteilhafterweise der Ziehteppich durch die Rollenkästen gezogen wird. Zweckmäßigerweise ist das Leiterseilbündel oder das einzelne Leiterseil ein Teil einer Zugfolge. Die Zugfolge umfasst vorteilhafterweise wenigstens ein Vorseil, einen Ziehteppich und das Leiterseilbündel. Es liegt im Rahmen der Erfindung, dass der Ziehteppich zwischen dem Vorseil und dem Leiterseilbündel angeordnet ist. Es ist zweckmäßig, wenn die ganze Zugfolge durch die Rollenkästen gezogen wird. Vorzugsweise ist der Ziehteppich rotatorisch von dem Leiterseilbündel bzw. einzelnen Leiterseilen des Leiterseilbündels und/oder dem Vorseil entkoppelt. Es ist zweckmäßig, dass der Ziehteppich über Ziehstrümpfe mit den Leiterseilen verbunden wird. Vorzugsweise wird je ein Seilwirbel zwischen den Ziehstrümpfen und rückseitigen Anschlussseilen des Ziehteppiches geschaltet. Vorzugsweise umfasst der Ziehteppich ein vorderseitiges Anschlussseil, welches vorderseitige Anschlussseil zweckmäßigerweise über einen Seilwirbel mit dem Vorseil verbunden wird. Alternativ umfasst die Zugfolge wenigstens das einzelne Leiterseil sowie ein Vorseil. Zweckmäßigerweise sind das Vorseil und das einzelne Leiterseil über einen Ziehstrumpf miteinander verbunden. Es ist möglich, das einzelne Leiterseil und das Vorseil, beispielsweise über einen Zwischengeschalteten Seilwirbel, rotatorisch voneinander zu entkoppeln.

Gemäß einer bevorzugten Ausführungsform wird bei der Anordnung der Rollenkästen an dem bereits aufgehängten Seil ein bzw. das Vorseil durch die Rollenkästen geführt, wobei vorzugsweise mit dem Vorseil das einzelne Leiterseil oder das Leiterseilbündel und ein bzw. der Ziehteppich - insbesondere ein weiter unten beschriebener, erfindungsgemäßer Ziehteppich - durch die Rollenkästen gezogen werden. Das Vorseil umfasst vorzugsweise einen Kunststoff und besteht weiter vorzugsweise vollständig aus Kunststoff. Gemäß einer anderen Ausführungsform umfasst das Vorseil Stahl und besteht weiter vorzugsweise vollständig aus Stahl. Das Vorseil ist zweckmäßigerweise ein Flechtseil, um Verdrehungen zu verringern.

Es ist vorteilhaft, wenn das Leiterseilbündel oder das einzelne Leiterseil mittels einer Mehrzahl von Abstandhaltern an Anknüpfpunkten des bereits aufgehängten Seiles befestigt wird. Es ist zweckmäßig, dass die Zahl der Rollenkästen der Zahl der Anknüpfpunkte bzw. der Zahl der Abstandhalter entspricht. Der Abstand zwischen zwei Rollenkästen beträgt vorzugsweise wenigstens 5 m, weiter vorzugsweise wenigstens 10 m und besonders vorzugsweise wenigstens 15 m. Der Abstand zwischen zwei Rollenkästen beträgt vorteilhafterweise höchstens 100 m, weiter vorteilhafterweise höchstens 50 m und besonders vorteilhafterweise höchstens 30 m.

Gemäß einer bevorzugten Ausführungsform werden die Rollenkästen und/oder die Abstandhalter mit Hilfe eines Seilfahrwagens an dem bereits aufgehängten Seil angeordnet bzw. festgeklemmt, wobei der Seilfahrwagen bevorzugt so ausgelegt ist, dass er wenigstens eine Person, vorzugsweise wenigstens zwei Personen tragen kann. Zweckmäßigerweise wird ein erster Rollenkasten der auf dem bereits aufgehängten Seil angeordneten Rollenkästen nach Befestigung des Leiterseilbündels oder des einzelnen Leiterseils an den Masten vom bereits aufgehängten Seil getrennt und durch einen Abstandhalter ersetzt. Es liegt im Rahmen der Erfindung, dass der Abstandhalter die Leiterseile des Leiterseilbündels oder das einzelne Leiterseil trägt und an bzw. an den Anknüpfungspunkten des bereits aufgehängten Seiles fixiert wird. Zweckmäßigerweise wird diese Ersetzung mehrfach wiederholt, bis das Leiterseilbündel oder das einzelne Leiterseil an mehreren Anknüpfpunkten zwischen den beiden Masten an dem bereits aufgehängten Seil aufgehängt ist. Vorteilhafterweise wird jeder Rollenkasten durch einen, vorzugsweise durch lediglich einen, Abstandhalter ersetzt.

Zur Lösung des technischen Problems lehrt die Erfindung auch einen Rollenkasten zur Aufhängung von Leiterseilbündeln oder von einem einzelnen Leiterseil, umfassend eine Achse, zwei Arme, einen Querträger und einen Seilhalter zur Halterung an einem bereits aufgehängten Seil, wobei der Seilhalter an den Querträger angeordnet ist, wobei die Achse von den zwei Armen gehalten wird, wobei die Arme über den Querträger miteinander verbunden sind,
wobei wenigstens zwei Seilrollen auf der Achse angeordnet sind und der lichte Abstand D zwischen den Seilrollen und dem Querträger bzw. dem Seilhalter wenigstens 5 cm, vorzugsweise wenigstens 7 cm und besonders vorzugsweise wenigstens 10 cm beträgt.

Es liegt im Rahmen der Erfindung, dass der Seilhalter und/oder die Seilrolle ausgebildet sind, ein für Hochspannungsfreileitungen ausgelegtes Leiterseil aufzunehmen. Der Durchmesser von Leiterseilen beträgt vorzugsweise wenigstens 2 cm, weiter vorzugsweise wenigstens 3 cm und besonders vorzugsweise wenigstens 3,5 cm.

Unter dem Ausdruck "Höhenrichtung" bzw. "Höhe" ist die Richtung derjenigen Normalen gemeint, welche die Längsachse L der Achse mit der Längsachse des Querträgers verbindet. Dementsprechend sind insbesondere Begriffe wie "oben", "unten", "oberhalb" und dergleichen zu verstehen. Unter dem Begriff "Breite" wird insbesondere diejenige Ausrichtung verstanden, welche sich parallel zur Längsachse der Achse erstreckt. Mit "Zugrichtung" bzw. "Rückzugrichtung" sind insbesondere die Richtungen gemeint, welche durch die Seilrollentangenten am oberen Rand der Seilrollen definiert werden.

Der Ausdruck "lichter Abstand" meint insbesondere einen Abstand, welcher frei ist von jedweden Elementen, so dass beispielsweise ein Ziehteppich entsprechend ungehindert zwischen den Seilrollen und dem Querträger bzw. dem Seilhalter in Zug- bzw. Rückzugrichtung hinweg gezogen werden kann. Der lichte Abstand wird insbesondere durch den Querträger bzw. den Seilhalter definiert, wobei zweckmäßigerweise auf dasjenige Element abzustellen ist, welches näher zu den Seilrollen hin gelegen ist. Die Seilrolle enthält vorzugsweise eine Laufkerbe für, bevorzugt, Hochspannungsleiterseile, wobei die Laufkerbe zwei Seilrollenwände definiert. Die Seilrollenwände weisen insbesondere jeweils einen Seilrollenrand auf, welcher seinerseits einen Außendurchmesser AD bestimmt. Der lichte Abstand bezieht sich insbesondere auf den Abstand vom Seilrollenrand bis zum Querträger bzw. bis zum Seilhalter. Die Innenseiten der Seilrollenwände am Seilrollenrand bestimmen zweckmäßigerweise einen Randabstand RA.

Die Arme definieren vorzugsweise eine lichte Breite, welche lichte Breite wenigstens 150 mm, vorzugsweise wenigstens 350 mm und besonders vorzugsweise wenigstens 550 mm beträgt. Auf der Achse können insbesondere drei, vier oder fünf Seilrollen angeordnet sein. Vorzugsweise sind wenigstens fünf Seilrollen auf der Achse angeordnet und weiter vorzugsweise sind lediglich fünf Seilrollen auf der Achse angeordnet. Es ist möglich, dass die Seilrollen auf einer einzelnen Achse oder auf zwei oder mehr Achsen angeordnet sind, wobei zweckmäßigerweise die zwei oder mehr Achsen eine gemeinsame Längsachse aufweisen. Die Längsachse der Achse ist vorteilhafterweise parallel zur Längsachse des Querträgers ausgerichtet.

Gemäß einer besonders bevorzugten Ausführungsform umfasst der Rollenkasten einen Querbalken, wobei die Achse zwischen dem Querträger und dem Querbalken angeordnet ist und wobei vorzugsweise der Querbalken die beiden Arme miteinander verbindet. Vorteilhafterweise stellt der Querbalken eine unmittelbare Verbindung der beiden Arme dar. Am Querbalken sind vorteilhafterweise eine und weiter vorteilhafterweise wenigstens zwei Stützstreben angeordnet, welche Stützstreben an die Achse angeschlossen sind, so dass die Achse durch die Stützstreben abgestützt wird. Zweckmäßigerweise verlaufen die Stützstreben in Höhenrichtung. Die eine Stützstrebe bzw. die wenigstens zwei Stützstreben sind praktischerweise zwischen zwei bzw. zwischen drei Seilrollen angeordnet.

Gemäß einer besonders bevorzugten Ausführungsform weist der Rollenkasten wenigstens ein Gleitelement auf, wobei das Gleitelement zwischen der Achse und den Querträger angeordnet ist und wobei vorzugsweise das Gleitelement die Seilrollen in Zugrichtung und/oder in Rückzugrichtung überragt. Vorzugsweise ist die Ausdehnung des Gleitelementes in Zugrichtung größer als der Außendurchmesser der Seilrollen. Es bevorzugt, dass das Gleitelement die gleiche Höhe wie die Seilrollenränder erreicht oder die Seilrollenränder in Höhenrichtung überragt. Das Gleitelement umfasst auf seiner Oberseite zweckmäßigerweise wenigstens eine Gleitfläche, welche Gleitfläche bevorzugt die Ausdehnung des Gleitelementes in der Zugrichtung und in der Höhenrichtung definiert. Die Gleitfläche ist beispielsweise konvex oder in Form eines Trapezes ausgebildet. Das Gleitelement ist praktischerweise an der Achse und/oder an dem Querbalken mittels Achsenstrebe/n angeschlossen. Die Achsenstrebe/n ist/sind vorteilhafterweise an der bzw. den Stützstrebe/n angeschlossen.

Gemäß einer sehr bevorzugten Ausführungsform weist der Rollenkasten eine Schließvorrichtung zum Öffnen und Schließen des Rollenkastens auf, so dass vorzugsweise die Achse, die Arme und der Querträger ein von dem Seilhalter gehaltenes Seil bzw. ein von einer der Seilrollen geführtes Seil umschließen können. Besonders vorzugsweise ist der Seilhalter an einer Fläche des Querträgers angeordnet, welche Fläche der Achse zugewandt ist. Es ist vorteilhaft, wenn die Schließvorrichtung ausgebildet ist, den Querträger mit wenigstens einem der beiden Arme zu verbinden und den Querträger von diesem Arm zu lösen. Die Schließvorrichtung ist vorzugsweise an einem Arm und weiter vorzugsweise an jedem der beiden Arme angeschlossen.

Idealerweise umfasst die Schließvorrichtung eine Befestigungseinrichtung und eine Sicherungseinrichtung. Die Befestigungseinrichtung weist vorzugsweise ein Halteteil sowie ein Formschlusselement auf. Das Halteteil kann in Formschluss mit dem Formschlusselement gebracht werden, wobei der Formschluss aus Halteteil und Formschlusselement vorzugsweise eine weiblich-männlich-Verbindung ist. Das Halteteil ist vorzugsweise hohlzylindrisch ausgebildet, wohingegen das Formschlusselement zweckmäßigerweise zylindrisch ausgebildet ist. Das Formschlusselement kann praktischerweise mit einem Befestigungsteil, beispielsweise eine Klemme, ein Bolzen oder eine Schraube, an dem Halteteil befestigt werden. Das Halteteil ist vorzugsweise an einem Arm befestigt.

Die Sicherungseinrichtung ist bevorzugter Weise so ausgebildet, dass der Querträger um einen bestimmten Abstand von dem Arm lösbar ist, bis die Sicherungseinrichtung sichert und größere Abstände nicht mehr zulässt. Die Sicherungseinrichtung umfasst vorzugsweise ein Verlängerungsteil, welches idealerweise gestreckt und biegeschlaff ausgebildet ist und insbesondere eine Kette oder ein Seil umfasst. Es ist vorteilhaft, wenn das Verlängerungsteil an den Querträger bzw. an das Formschlusselement angeschlossen ist. Die Sicherungseinrichtung umfasst zweckmäßigerweise einen Anschlag und einen Anschlagkörper, wobei der Anschlagkörper idealerweise an dem Arm und/oder an dem Querbalken, beispielsweise über einen Draht, befestigt ist. Es ist bevorzugt, dass der Anschlagkörper an dem Verlängerungsteil befestigbar ist und von diesem wieder lösbar ist. Der Anschlag ist vorzugsweise an dem Arm und/oder an dem Querbalken angeschlossen.

Es liegt im Rahmen der Erfindung, dass der Querträger ein Profil ist und vorzugsweise wenigstens eine Nut auf einer der Achse zugewandten Fläche aufweist. Zweckmäßigerweise ist der Querträger ein Strangprofil, wobei das Profil idealerweise Aluminium aufweist. Es ist vorteilhaft, wenn die Nut parallel zur Achse ausgerichtet ist. Die wenigstens eine Nut kann C-förmig ausgebildet sein. Vorzugsweise weist der Querträger auf der der Achse zugewandten Fläche wenigstens zwei Nuten auf. Es ist vorteilhaft, wenn eine von der Achse abgewandte Fläche des Querträgers wenigstens eine Nut und weiter vorteilhafterweise zwei Nuten aufweist. Die eine bzw. zwei Nuten auf der der Achse abgewandten Fläche sind zweckmäßigerweise C-förmig ausgebildet.

Vorteilhafterweise ist der Rollenkasten in Bezug zur Zug- bzw. Rückzugrichtung symmetrisch ausgebildet. Es ist zweckmäßig, dass der Rollenkasten symmetrisch zur Längsachse der Achse ausgebildet ist. In bevorzugter Weise ist der Rollenkasten so gestaltet, dass eine spiegelverkehrte Anordnung auf dem bereits aufgehängten Seil sich nicht auf die Wechselwirkung zwischen Rollenkasten und Ziehteppich auswirkt.

Es liegt im Rahmen der Erfindung, dass der Seilhalter eine Seilklemme ist. Die Seilklemme umfasst zweckmäßigerweise einen Klemmabschnitt zum Einklemmen eines bereits aufgehängten Seiles sowie eine Klemmbetätigung. Die Klemmbetätigung kann beispielsweise eine Schraubverbindung oder ein Spannverschluss sein. Die Seilklemme ist vorteilhafterweise so ausgebildet, dass das bereits aufgehängte Seil zwischen dem Klemmabschnitt und dem Querträger einklemmbar ist. Gemäß einer ersten Ausführungsform ist der Klemmabschnitt auf einer der Achse abgewandten Fläche des Querträgers angeordnet. Gemäß einer bevorzugten Ausführungsform ist der Klemmabschnitt auf einer der Achse zugewandten Fläche des Querträgers angeordnet. Idealerweise ist der Klemmabschnitt L- oder U-förmig ausgebildet. Der Klemmabschnitt kann so geformt sein, dass er in die Nut bzw. in die Nuten des Querträgers eingreift und darin verschoben werden kann.

Es ist zweckmäßig, wenn das Verhältnis des Außendurchmessers AD zu dem Randabstand RA der Seilrolle wenigstens 0,5, weiter bevorzugt wenigstens 1, sehr bevorzugt wenigstens 1,5 und ganz besonders bevorzugt, wenigstens 1,8 beträgt. Zweckmäßigerweise beträgt das Verhältnis des Außendurchmessers AD zu dem Randabstand RA der Seilrolle höchstens 6, vorzugsweise höchstens 5, weiter vorzugsweise höchstens 4 und besonders vorzugsweise höchstens 3.

Zur Lösung des technischen Problems lehrt die Erfindung einen Ziehteppich zum Ziehen eines Leiterseilbündels, wobei der Ziehteppich einen Hauptkörper umfasst, wobei der Hauptkörper eine Rückseite aufweist, welche Rückseite dem Leiterseilbündel zugeordnet ist, wobei der Hauptkörper eine von der Rückseite abgewandte Vorderseite umfasst,

wobei der Hauptkörper an seiner Unterseite wenigstens eine Kufe aufweist, wobei die Kufe an ihrem vorderseitigen Ende und/oder an ihrem rückseitigen Ende eine Schräge bzw. eine Rundung aufweist.

Vorteilhafterweise ist wenigstens ein rückseitiges Anschlussseil und weiter vorteilhafterweise sind wenigstens zwei rückseitige Anschlussseile der Rückseite des Hauptkörpers zugeordnet. Zweckmäßigerweise ist ein vorderes Anschlussseil der Vorderseite des Hauptkörpers zugeordnet. Der Hauptkörper weist wenigstens eine Umlenkrolle auf, über welche Umlenkrolle das rückseitige Anschlussseil gelegt ist. Weiter vorzugsweise weist der Hauptkörper eine mittlere Umlenkrolle und zwei äußere Umlenkrollen auf, wobei ein erstes rückseitiges Anschlussseil um die mittlere Umlenkrolle und ein zweites rückseitiges Anschlussseil um die beiden äußeren Umlenkrollen gelegt ist. Vorzugsweise verläuft die Achse der Umlenkrolle bzw. verlaufen die Achsen der Umlenkrollen in Höhenrichtung. Die Höhenrichtung ist insbesondere diejenige Richtung, welche senkrecht auf der von Länge und Breite aufgespannten Fläche steht. Dabei meint "Längsrichtung" insbesondere diejenige Richtung von der Rückseite zur Vorderseite des Hauptkörpers und damit die Zugrichtung. Zweckmäßigerweise ist der Ziehteppich symmetrisch zur Längsrichtung ausgebildet und weist somit eine Längsachse auf. Die Breite erstreckt sich zweckmäßigerweise über einen symmetrischen Querschnitt des Ziehteppiches hinweg. Der Hauptkörper mitsamt Kufe bzw. Kufen wiegt bevorzugt höchstens 60 kg und weiter bevorzugt höchstens 45 kg und wiegt zweckmäßigerweise wenigstens 10 kg und bevorzugt wenigstens 15 kg. Der Hauptkörper und/oder die Kufe bzw. die Kufen weisen vorteilhafterweise Aluminium auf.

Die Schräge bzw. Rundung ist vorzugsweise an der Unterseite der Kufe angeordnet. Gemäß einer Ausführungsform weist der Hauptkörper an seiner Unterseite zwei Kufen auf, wobei die zwei Kufen praktischerweise bezüglich der Längsachse des Ziehteppiches in der Breite zueinander symmetrisch angeordnet sind.

Gemäß einer besonders bevorzugten Ausführungsform umfasst der Ziehteppich wenigstens drei Kufen an der Unterseite des Hauptkörpers. Es ist zweckmäßig, dass der Ziehteppich eine mittlere Kufe und zwei äußere Kufen umfasst. Die mittlere Kufe ist vorteilhafterweise bezüglich ihrer Breite symmetrisch zur Längsachse des Ziehteppiches angeordnet. Bevorzugt sind die beiden äußeren Kufen bezüglich der Längsachse und entlang der Breite des Ziehteppiches zueinander symmetrisch angeordnet. Es ist vorteilhaft, wenn die mittlere Kufe in Zugrichtung die beiden äußeren Kufen überragt. Die mittlere Kufe weist vorteilhafterweise an der Vorderseite ihrer Unterseite die Schräge bzw. Rundung auf. Die äußeren Kufen überragen vorzugsweise in Rückzugrichtung die mittlere Kufe, wobei die äußeren Kufen praktischerweise an ihrer Unterseite an ihrem rückseitigen Ende die Schräge bzw. Rundung aufweisen. Es ist bevorzugt, wenn die äußeren Kufen jeweils einen Seilabschnitt führen.

Gemäß einer sehr bevorzugten Ausführungsform umfasst der Ziehteppich einen Klappanker und insbesondere einen erfindungsgemäßen, nachfolgend noch genauer beschriebenen Klappanker, wobei der Klappanker wenigstens einen Klapparm aufweist, wobei der Klappanker so ausgebildet ist, dass der Klapparm beginnt auszuklappen, wenn eine auf den Klappanker einwirkende Zugkraft einen Auslöseschwellwert unterschreitet. Vorzugsweise ist der Hauptkörper bzw. die Vorderseite des Hauptkörpers über wenigstens ein Seil bzw. das vorderseitige Anschlussseil mit dem Klappanker verbunden. Der Klappanker umfasst sehr bevorzugt zwei Klapparme, wobei beide Klapparme ausklappen, wenn die auf den Klappanker einwirkende Zugkraft den Auslöseschwellwert unterschreitet.

Zur Lösung des technischen Problems lehrt die Erfindung ein System, umfassend wenigstens einen Rollenkasten, insbesondere einen erfindungsgemäßen, bereits oben beschriebenen Rollenkasten, und umfassend einen Ziehteppich, insbesondere einen erfindungsgemäßen und bereits oben beschriebenen Ziehteppich, wobei der Rollenkasten wenigstens zwei Seilrollen auf einer Achse umfasst, wobei der Ziehteppich wenigstens eine Kufe aufweist,

wobei die Kufe so ausgebildet ist, dass sie von einer der Seilrollen aufgenommen werden kann, so dass der Ziehteppich in Zugrichtung - und vorzugsweise auch in Rückzugrichtung - den Rollenkasten passieren kann.

Vorteilhafterweise weist der Ziehteppich zwei Kufen auf, wenn der Rollenkasten zwei Seilrollen aufweist. Wenn der Rollenkasten drei Seilrollen umfasst, weist der Ziehteppich vorzugsweise eine oder drei Kufen auf. Umfasst der Rollenkasten vier Seilrollen, so sind zweckmäßigerweise zwei oder vier Kufen an dem Ziehteppich angeordnet. Wenn der Rollenkasten sehr vorzugsweise fünf Seilrollen aufweist, kann der Ziehteppich eine, drei oder fünf Kufen umfassen. Es ist bevorzugt, dass die Zahl der Kufen gerade ist, wenn die Zahl der Seilrollen gerade ist. Wenn die Zahl der Kufen ungerade ist, ist die Zahl der Seilrollen zweckmäßigerweise ungerade. Die Zahl der Kufen ist zweckmäßigerweise kleiner oder gleich der Zahl der Seilrollen. Vorteilhafterweise umfasst der Ziehteppich einen Klappanker mit wenigstens einem Klapparm. Der Rollenkasten umfasst bevorzugt wenigstens zwei Arme, wobei die beiden Arme eine lichte Breite des Rollenkastens definieren. Zweckmäßigerweise weist der Klappanker eine durch den wenigstens einen Klapparm definierte Spannbreite auf, welche Spannbreite größer als die lichte Breite des Rollenkastens ist.

Die Erfindung betrifft außerdem eine Vorrichtung zur Verhinderung von Seilabstürzen bei der Aufhängung von Leiterseilen. Bei der Aufhängung von einzelnen Leiterseilen oder ganzen Leiterseilbündeln treten schon allein aufgrund des Eigengewichtes des Leiterseiles bzw. der Leiterseilbündel und aufgrund der Abstände zwischen zwei Masten von in der Regel mehreren 100 m ganz erhebliche Zugkräfte auf. So können beispielsweise Ziehstrümpfe eine Schwachstelle bilden und reißen, woraufhin das Leiterseil bzw. das Leiterseilbündel abstürzen kann. In einem solchen sehr seltenen, jedoch nicht auszuschließenden Fall können je nach Situation ganz erhebliche Schäden auftreten. Ein Stand der Technik betreffend eine Vorrichtung zur Vermeidung von Seilabstürzen während der Aufhängung ist nicht bekannt. Es wird in der Praxis lediglich versucht, die Gefahr eines Seilabsturzes zu verringern, indem die Abstände der Rollen beim Rollenleinenverfahren verringert werden bzw. sehr gering gehalten werden. Der Erfindung liegt daher das technische Problem zugrunde, eine Vorrichtung zu schaffen, welche den Absturz von einem Leiterseil oder von einem Leiterseilbündel während der Aufhängung gänzlich verhindert.

Zur Lösung des technischen Problems lehrt die Erfindung einen Klappanker zur Sicherung von Leiterseilen während der Aufhängung der Leiterseile, umfassend wenigstens einen Klapparm, vorzugsweise wenigstens zwei Klapparme, und eine Verbindungseinrichtung, wobei der Klapparm an der Verbindungseinrichtung angeordnet ist, wobei der Klapparm so ausgebildet ist, dass er in einer ausgeklappten Stellung weiter von der Verbindungseinrichtung absteht, als in einer eingeklappten Stellung, wobei die Verbindungseinrichtung ein erstes Verbindungselement sowie ein zweites Verbindungselement umfasst, wobei die beiden Verbindungselemente eine Wirkungsrichtung definieren, wobei die Verbindungseinrichtung einen Auslöser aufweist, welcher Auslöser so ausgebildet ist, dass er den Klapparm von der eingeklappten in die ausgeklappte Stellung überführen kann, wobei der Auslöser ausgebildet ist, den Klapparm auszulösen, in dem der Klapparm beginnt auszuklappen, wenn eine Zugkraft entlang der Wirkungsrichtung einen Auslöseschwellwert unterschreitet.

Der Ausdruck "Verbindungselement" meint insbesondere solche Elemente, welche die Verbindung mit anderen Körpern einer Zugfolge ermöglichen. Die Verbindungselemente können beispielsweise Haken oder Ösen bzw. Löcher sein. Zweckmäßigerweise sind die Verbindungselemente dazu ausgelegt, mit Seilen verbunden zu werden. Der Auslöser kann rein mechanisch oder aber auch elektromechanisch ausgebildet sein. Der Klappanker ist zweckmäßigerweise Teil einer Zugfolge, wobei die Zugfolge ein einzelnes Leiterseil oder ein Leiterseilbündel umfassen kann. Besonders vorzugsweise ist der Klappanker Teil eines Ziehteppiches, insbesondere eines weiter oben beschriebenen erfindungsgemäßen Ziehteppiches.

Es liegt im Rahmen der Erfindung, dass der Auslöser so ausgebildet ist, dass der Auslöser bezüglich der Zugkraft einen Stoppschwellwert aufweist, bei welchem Stoppschwellwert der Klapparm nicht mehr weiter ausgeklappt werden kann und wobei bevorzugt der Stoppschwellwert kleiner oder gleich dem Auslöseschwellwert ist. Gemäß einer ersten bevorzugten Ausführungsform ist der Stoppschwellwert kleiner als der Auslöseschwellwert. Gemäß einer anderen Ausführungsform ist der Auslöseschwellwert gleich dem Stoppschwellwert. Vorzugsweise wird der Stoppschwellwert nicht durch den Klapparm bzw. die Klapparme definiert. Es ist zweckmäßig, dass der Stoppschwellwert durch die Verbindungseinrichtung bestimmt wird.

Gemäß einer bevorzugten Ausführungsform umfasst der Auslöser eine Feder, welche Feder bevorzugt zwischen den Verbindungselementen angeordnet ist. Die Feder arbeitet zweckmäßigerweise entlang der Wirkungsrichtung und ist vorzugsweise eine Schraubenfeder, deren Längsachse in Wirkungsrichtung ausgebildet ist. Vorteilhafterweise ist die Feder so angeordnet, dass sie gegen die an den Verbindungselementen angreifende Zugkraft arbeitet und einen entsprechenden Gegendruck bzw. Gegenzug erzeugt.

Vorzugsweise weist die Verbindungseinrichtung eine Schiene und einen Schienenläufer auf, wobei der Schienenläufer auf der Schiene eine Laufrichtung definiert, wobei die Laufrichtung bevorzugt der Wirkungsrichtung entspricht. Der Schienenläufer kann mit dem ersten Verbindungselement, und die Schiene kann mit dem zweiten Verbindungselement verbunden werden. Zweckmäßigerweise überlappen sich der Schienenläufer und die Schiene in Laufrichtung wenigstens teilweise und bilden so einen Überlappbereich. Vorteilhafterweise ist die Feder in dem Überlappbereich zwischen einem ersten Ende des Schienenläufers und einem ersten Ende der Schiene angeordnet.

Es ist vorteilhaft, wenn der Auslöser einen ersten Anschlag und einen an den ersten Anschlag anschlagbaren Anschlagkörper umfasst, wobei vorzugsweise der erste Anschlag und der Anschlagkörper den Auslöseschwellwert bestimmen. Vorzugsweise entspricht die Bewegungsrichtung des Anschlagkörpers der Wirkungsrichtung. Es ist zweckmäßig, wenn der Anschlagkörper an dem Schienenläufer angeordnet ist. Der erste Anschlag kann Teil einer Ausnehmung in der Schiene sein und ist vorzugsweise ein Abschnitt eines Langloches in der Schiene. Es ist bevorzugt, wenn der Anschlagkörper an einem zweiten Anschlag anschlagen kann, wobei der zweite Anschlag vorzugsweise durch die Ausnehmung bzw. das Langloch gebildet wird.

Gemäß einer bevorzugten Ausführungsform umfasst der Klapparm eine Hauptstrebe sowie eine Stützstrebe, wobei die Hauptstrebe und die Stützstrebe über ein gemeinsames Drehgelenk miteinander verbunden sind. Die Stützstrebe ist zweckmäßigerweise entlang der Wirkungsrichtung verschiebbar und vorzugsweise mit dem Schienenläufer über ein eigenes bzw. zweites Drehgelenk verbunden. Die Hauptstrebe ist zweckmäßigerweise über ein eigenes bzw. drittes Drehgelenk mit der Schiene verbunden.

Es liegt im Rahmen der Erfindung, wenn die durch den wenigstens einen Klapparm definierte Spannbreite B des Klappankers im ausgeklappten Zustand größer als 5 cm, vorzugsweise größer als 35 cm und besonders vorzugsweise größer als 55 cm ist. Die Spannbreite ist insbesondere diejenige Ausdehnung, welche durch den Klapparm bzw. die Klapparme und die Verbindungseinrichtung definiert wird und welche senkrecht zur Wirkungsrichtung ausgerichtet ist.

Es ist vorteilhaft, wenn der Klappanker einen Auslöseschwellwert kleiner/gleich 20 kN, vorzugsweise kleiner/gleich 12 kN, weiter vorzugsweise kleiner/gleich 7 kN und ganz besonders vorzugsweise kleiner/gleich 5 kN liegt. Der Auslöseschwellwert kann größer/gleich 0,5 kN, vorzugsweise größer/gleich 1 kN, weiter vorzugsweise größer/gleich 1,5 kN und besonders vorzugsweise größer/gleich 2 kN liegen.

Der Stoppschwellwert ist zweckmäßigerweise kleiner gleich 10 kN, kleiner gleich 5 kN, kleiner gleich 3 kN und besonders vorzugsweise kleiner gleich 2 kN. Der Stoppschwellwert ist vorzugsweise größer gleich 0,1 kN, größer gleich 0,2 kN, größer gleich 0,3 kN und besonders vorzugsweise größer gleich 0,5 kN.

Gemäß einer bevorzugten Ausführungsform umfasst der Klapparm wenigstens einen Widerhaken. Der Widerhaken ist vorzugsweise in Wirkungsrichtung ausgebildet. Gemäß einer alternativen Ausführungsform umfasst der Klapparm zwei Widerhaken, wobei der erste Widerhaken dem ersten Verbindungselement, und der zweite Widerhaken dem zweiten Verbindungselement zugewandt ist. Gemäß einer bevorzugten Ausführungsform endet die Stützstrebe an dem Stütz- und Hauptstrebe verbindenden Drehgelenk, so dass lediglich ein Widerhaken pro Klapparm vorhanden ist. Alternativ überragt die Stützstrebe das Stütz- und Hauptstrebe verbindende Drehgelenk, so dass der Klapparm eine X-Form aufweist und zwei Widerhaken umfasst, welche in Zug- und Rückzugrichtung zeigen.

Vorzugsweise umfasst die Verbindungseinrichtung an ihrer Umkehrseite wenigstens eine Kufe. Die Längsachse der Kufe ist zweckmäßigerweise in Wirkungsrichtung ausgebildet und weist an ihrer Unterseite wenigstens eine Schräge bzw. Rundung auf. Vorzugsweise ist die Schräge bzw. Rundung an der Vorder- und/oder an der Rückseite der Kufe angeordnet. Die Breite der Kufe ist bevorzugt kleiner/gleich 15 cm, weiter bevorzugt kleiner/gleich als 10 cm und besonders bevorzugt kleiner/gleich 7 cm.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines Spannfeldes zwischen zwei Masten einer Freileitung, wobei ein Leiterseilbündel an mehreren Anknüpfpunkten mit zwei unter hoher mechanischer Spannung stehenden Tragseilen verbunden ist,
- Fig. 2A: eine Draufsicht einer Zugfolge umfassend das noch aufzuhängende Leiterseilbündel aus Fig. 1, einen erfindungsgemäßen Ziehteppich sowie ein Vorseil,
- Fig. 2B: die Zugfolge aus Fig. 2A in einer Seitenansicht,
- Fig. 3: einen erfindungsgemäßen und im Einsatz befindlichen Rollenkasten in perspektivischer Ansicht, mit dessen Hilfe das Leiterseilbündel aus den Figuren 1 und 2 an den Tragseilen befestigt wird,
- Fig. 4: den Rollenkasten aus Fig. 3 in Vorderansicht, wobei der Rollenkasten nicht im Einsatz befindlich ist,
- Fig. 5A: eine Draufsicht auf einen erfindungsgemäßen Klappanker zur Sicherung der Zugfolge aus den Figuren 2A und 2B, wobei der Klappanker in einem eingeklappten Zustand dargestellt ist und
- Fig. 5B: den Klappanker aus Fig. 5A in einem ausgeklappten Zustand.

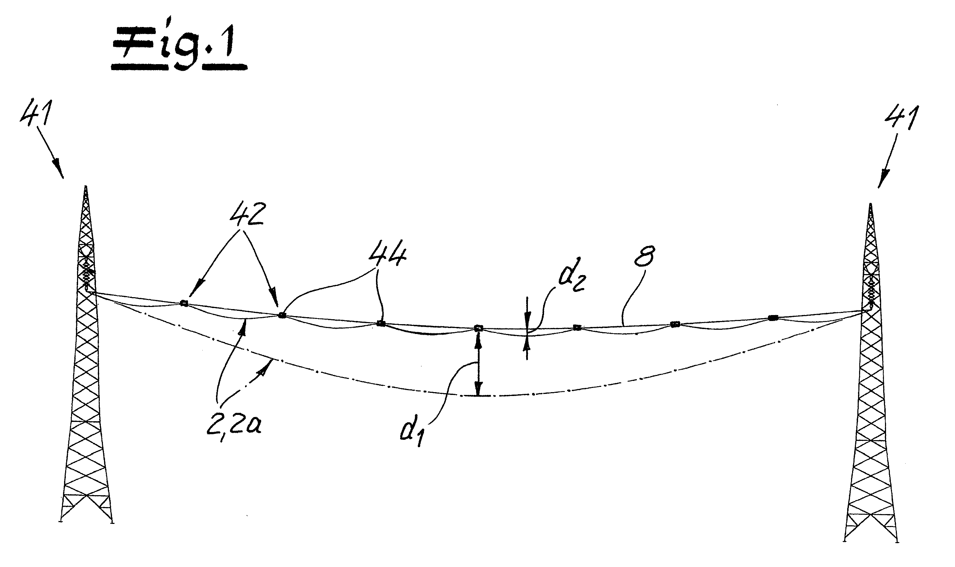

In Fig. 1 ist ein Spannfeld zwischen zwei Masten 41 einer Freileitung dargestellt, welches Spannfeld zwei nebeneinander liegende Tragseile 8 und ein für Hochspannungen ausgelegtes Leiterseilbündel 2 aufweist. Das Leiterseilbündel 2 umfasst insgesamt vier Leiterseile 2a, welche an Anknüpfpunkten 42 über Abstandhalter 44 an den Tragseilen 8 befestigt sind. Das hier dargestellte Spannfeld weist die Besonderheit auf, dass die beiden Transeile 8 unter einer besonders hohen Zugspannung stehen, so dass im Vergleich zu Seilen mit herkömmlicher Zugspannung ein deutlich geringerer Durchhang erreicht wird. Die strichpunktierte Linie veranschaulicht den Durchhang der Seile unter herkömmlicher Zugspannung. Aufgrund des wesentlich geringeren Durchhanges der Seile bei großer Zugspannung können die Masten niedriger und schmaler ausgeführt werden, so dass das Landschaftsbild deutlich weniger beeinträchtigt und die Akzeptanz der im Vergleich zu Erdleitungen günstigeren Freileitungen steigt.

Das Leiterseilbündel 2 steht unter einer geringeren Zugspannung, damit die bei den Leiterseilen 2a größeren Temperaturschwankungen kompensiert werden können. Durch die mehrfache Anknüpfung der Leiterseile 2a bzw. des Leiterseilbündels 2 an den beiden Tragseilen 8 wird ein Durchhang d₂ erreicht, welcher deutlich kleiner ist als der Durchhang d₁ ohne mehrfache Befestigung des Leiterseilbündels 2 an den Tragseilen 8. Die girlandenartige Befestigung führt somit zu einer Vereinigung der Vorteile aus geringem Durchhang und guter Temperaturkompensationsfähigkeit.

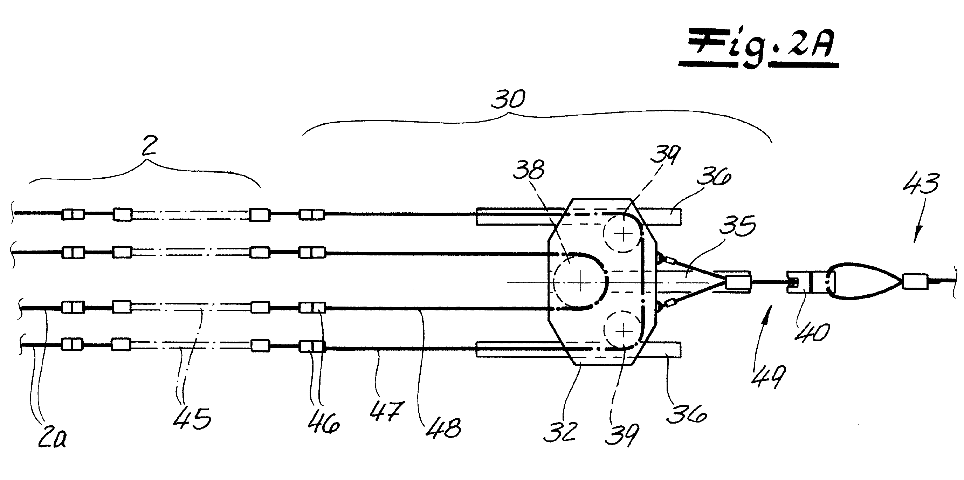

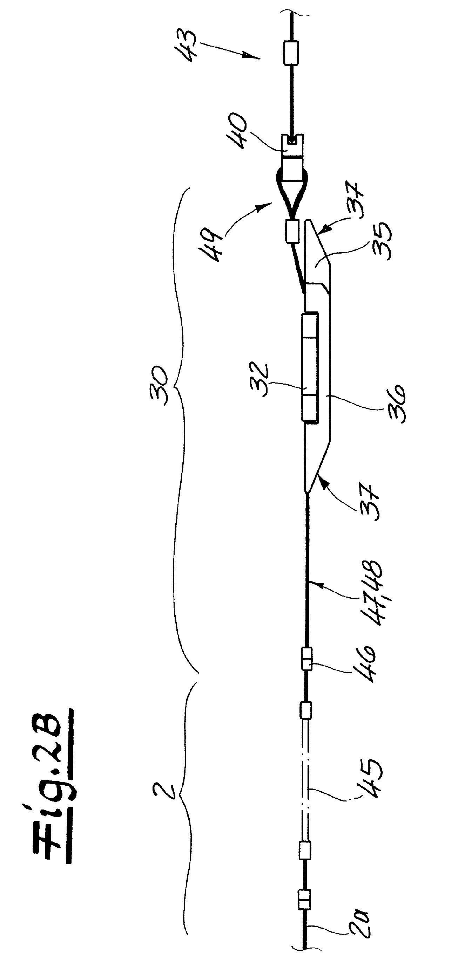

In den Figuren 2A und 2B ist eine Zugfolge zur Aufhängung eines Leiterseilbündels 2 umfassend vier Leiterseile 2a dargestellt, welche Zugfolge neben dem Leiterseilbündel 2 noch einen Ziehteppich 30 sowie ein Vorseil 43 umfasst. Mit Hilfe des als Multiplikator dienenden Ziehteppiches 30 ist es möglich, nicht nur einzelne Leiterseile 2a, sondern gleich ganze Leiterseilbündel 2 zwecks Aufhängung durch das Spannfeld zu ziehen. Hierbei sind die einzelnen Leiterseile 2a über jeweils einen Ziehstrumpf 45 sowie einen Wirbel 46 mit zwei rückseitigen Anschlussseilen 47, 48 des Ziehteppiches 30 verbunden. Dabei ist das Anschlussseil 47 über zwei äußere Umlenkrollen 39 in einen Hauptkörper 32 des Ziehteppiches 30 hinein- und wieder herausgeführt. Das Anschlussseil 48 wird über eine mittlere Umlenkrolle 38 gelegt. Die Wirbel 46 dienen der rotatorischen Entkopplung der einzelnen Leiterseile 2a von den beiden Anschlussseilen 47, 48. Die Überbrückung mittels der Anschlussseile 47, 48 und der Umlenkrollen 38, 39 dient dem symmetrischen Kräfteausgleich zwischen den beiden inneren bzw. den beiden äußeren Leiterseilen 2a, so dass - mit Hilfe der rotatorischen Entkopplung durch die Wirbel 46 - der Ziehteppich 30 während des Zuges sich nicht verdreht. Ein weiterer Wirbel 40 zwischen einem vorderen Anschlussseil 49 des Ziehteppiches 30 und dem Vorseil 43 dient gleichermaßen der rotatorischen Entkopplung.

Wie insbesondere Fig. 2A gut zu entnehmen ist, weist der Ziehteppich 30 neben dem Hauptkörper 32 noch drei Kufen 35, 36 auf, wobei die mittlere Kufe 35 eine Längsachse aufweist, welche mit der Zugrichtung übereinstimmt. Die beiden äußeren Kufen 36 sind links und rechts von der mittleren Kufe 35 symmetrisch zueinander angeordnet. In Zugrichtung überragt die mittlere Kufe 35 die beiden äußeren Kufen 36, wohingegen die beiden äußeren Kufen 36 die mittlere Kufe 35 in Rückzugrichtung überragen. Insbesondere in Fig. 2B ist zu erkennen, dass die Kufen 35, 36 an ihren Unterseiten jeweils eine Schräge 37 aufweisen. Dabei befindet sich die Schräge 37 der beiden äußeren Kufen 36 an dem jeweils hinteren Ende, wohingegen sich die Schräge 37 der mittleren Kufe 35 an dem vorderen Ende befindet.

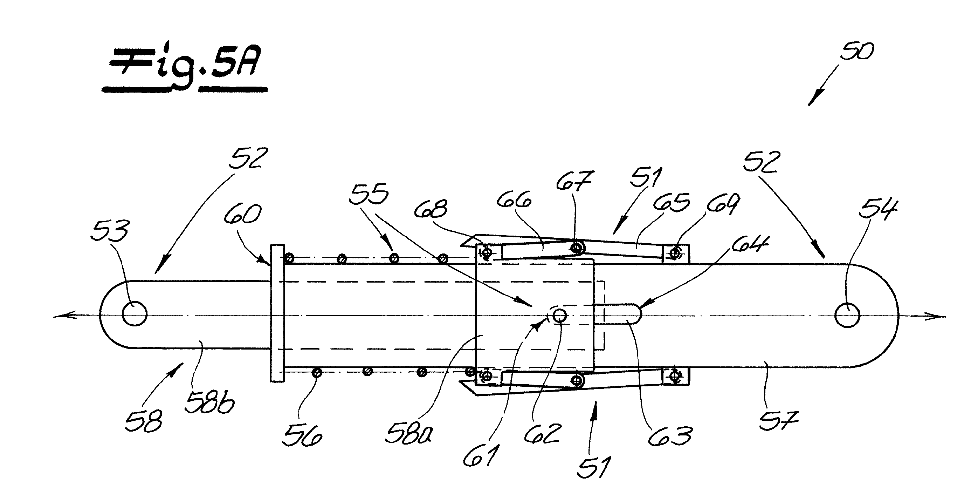

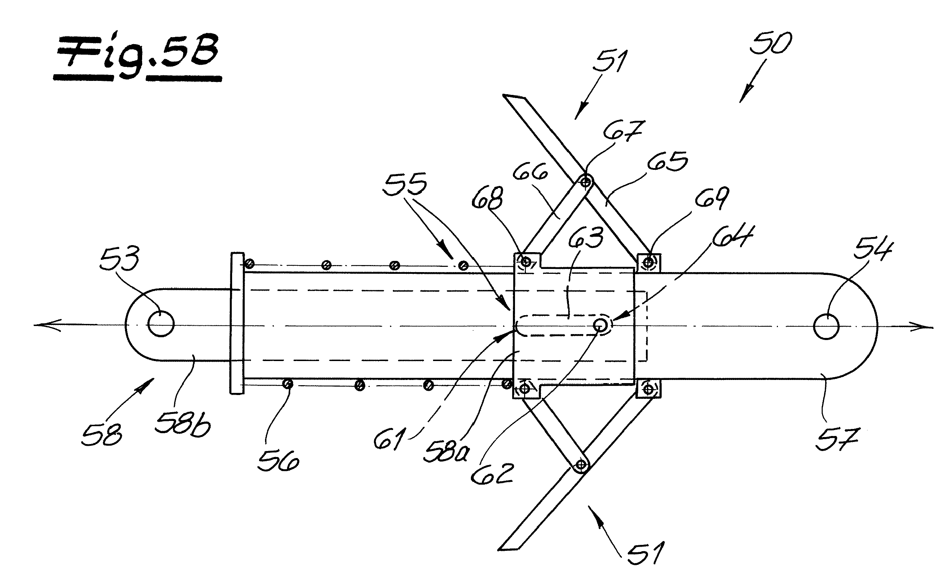

Der Ziehteppich 30 gemäß der Figuren 2A und 2B kann einen in den Figuren 5A und 5B hier nicht dargestellten Klappanker 50 umfassen. Der Klappanker 50 kann sich beispielsweise zwischen dem Hauptkörper 32 und dem Vorseil 43 befinden. Zweckmäßigerweise ist der Klappanker 50 zwischen dem vorderen Anschlussseil 49 des Ziehteppiches 30 und dem Wirbel 40 geschaltet. Der Klappanker wird nachfolgend noch genauer beschrieben.

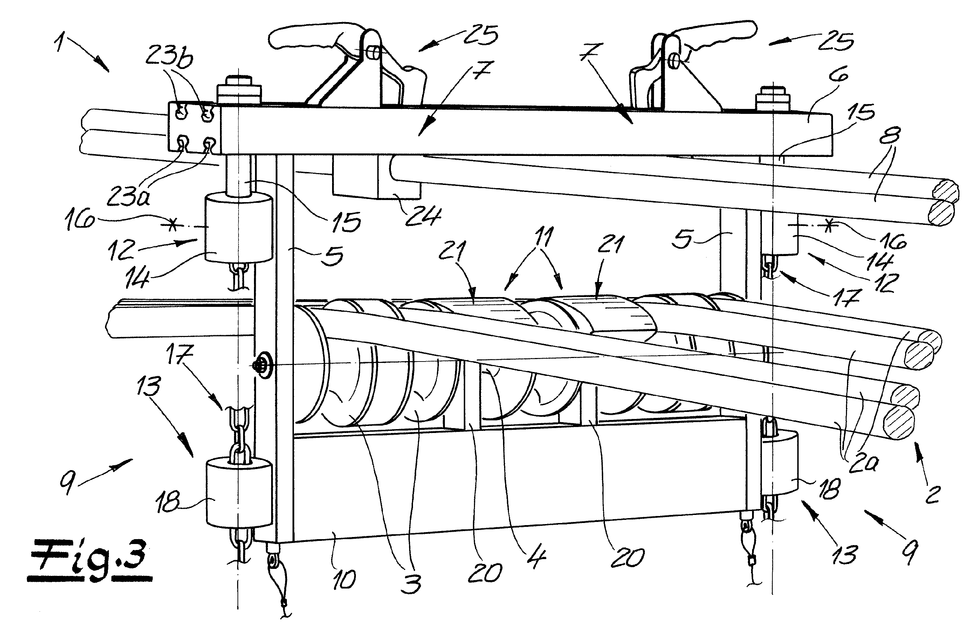

In Fig. 3 ist ein Rollenkasten 1 abgebildet, durch welchen die Zugfolge aus den Figuren 2A und 2B gezogen wird. Der Rollenkasten 1 weist zwei Seilhalter 7 auf, mit welchen Seilhaltern 7 die beiden Tragseile 8 an einen Querträger 6 des Rollenkastens 1 geklemmt werden. Der Rollenkasten 1 umfasst ferner zwei Arme 5, welche mit dem Querträger 6 über jeweils eine Schließvorrichtung 9 verbunden sind und welche nach unten zeigen. Am unteren Ende der beiden Arme 5 sind beide Arme 5 über einen Querbalken 10 miteinander verbunden. Zwischen dem Querbalken 10 und dem Querträger 6 ist eine Achse 4 angeordnet, auf welcher insgesamt fünf Seilrollen 3 gelagert sind. Mit Hilfe der Seilrollen 3 wird der Kraftaufwand minimiert, um die in den Figuren 2A und 2B dargestellte Zugfolge möglichst leicht durch die Rollenkästen 1 hindurchzuziehen. In Fig. 3 ist die Situation dargestellt, nachdem der Ziehteppich 30 und die Ziehstrümpfe 45 bereits durch den Rollenkasten 1 gezogen wurden, so dass die vier Leiterseile 2a des Leiterseilbündels 2 nun in den Seilrollen 3 geführt werden. Aufgrund der geringen von den Leiterseilen 2a ausgehenden Krafteinwirkung auf die Seilrollen 3 können die Seilrollen 3 verhältnismäßig klein ausgebildet werden. Das Verhältnis des Außendurchmessers AD zum Randabstand RA beträgt 2,3.

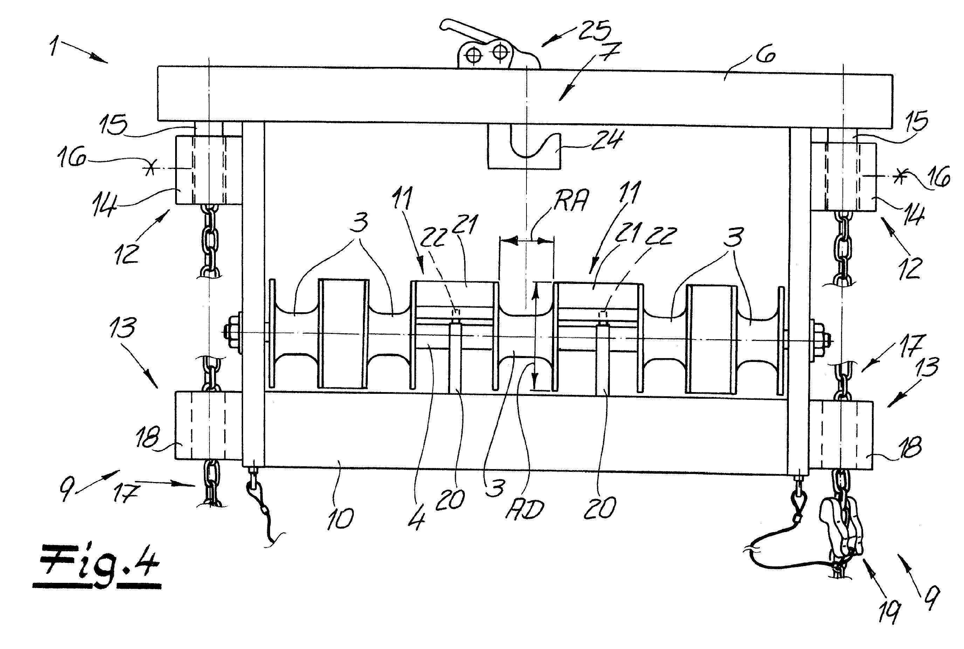

In Fig. 4 ist der Rollenkasten 1 aus Fig. 3 dargestellt, wobei zwecks Übersichtlichkeit auf die Darstellung der Seile 2a, 8 verzichtet wurde. Ebenso ist aus dem gleichen Grunde in Fig. 4 lediglich ein Seilhalter 7 zu erkennen, welcher im Wesentlichen aus einer Seilklemme 24 und einer Klemmbetätigung 25 in Form eines Spannverschlusses besteht. Die Seilklemme 24 ist etwa U- bzw. L-förmig und weist an ihrem oberen Ende zwei Vorsprünge auf, welche in zwei C-Nuten 23a des Querträgers 6 eingreifen. Hierdurch kann die Seilklemme 24 zusammen mit der an dieser befestigten Klemmbetätigung 25 ein Stück weit verfahren werden. Aus diesem Grunde ist die Klemmbetätigung 25 ebenfalls mit zwei Vorsprüngen versehen, welche in zwei weiteren, in Fig. 3 dargestellten C-förmigen Nuten 23b auf der Oberseite des Querträgers 6 eingreifen. Mittels Betätigung des Hebels der Klemmbetätigung 25 in Richtung Querträger 6 wird die Seilklemme 24 etwas nach oben gezogen, so dass hierdurch das Tragseil 8 an dem Querträger 6 festgeklemmt werden kann.

Die Schließvorrichtung 9 umfasst eine Befestigungseinrichtung 12 sowie eine Sicherungseinrichtung 13. Die Befestigungseinrichtung 12 wiederum setzt sich zusammen aus einem hohlzylindrisch ausgebildeten Halteteil 14, welches an der Außenseite des Armes 5 befestigt ist sowie aus einem Formschlusselement 15 in zylindrischer Form, welches Formschlusselement 15 einen Formschluss mit dem hohlzylindrischen Halteteil 14 eingehen kann. Die Befestigungseinrichtung 12 weist ferner ein Befestigungsteil 16 in Form einer Schraube auf, welche in das Halteteil 14 eingeschraubt werden kann, so dass das Formschlusselement in dem Halteteil 14 fixiert wird.

Die Sicherungseinrichtung 13 umfasst ein Verlängerungsteil 17 in Form einer Kette, einen Anschlag 18 in Form eines gabelförmigen Hohlzylinders sowie einen Anschlagkörper 19 in Form eines Kettenverkürzers auf. Das Verlängerungsteil 17 ist an dem unteren Ende des Formschlusselementes 15 befestigt und kann durch den Anschlag 18 hindurchgezogen werden. Der Anschlagkörper 19 ist mittels eines dünnen Metallseils an dem unteren Ende des Armes 5 befestigt und kann an einem Kettenglied des Verlängerungsteiles 17 unterhalb des Anschlages 18 eingehakt werden. Sollte sich das Formschlusselement 15 unbeabsichtigt aus dem Halteteil 14 lösen, so wäre der Rollenkasten 1 immer noch an den Seilen 2a, 8 gesichert, da der Anschlagkörper 19 am Anschlag 18 ein Herausgleiten des Verlängerungsteiles 17 aus dem Anschlag 18 verhindert.

Die zwischen den Armen 5 angeordnete Achse 4 wird durch zwei Stützstreben 20 abgestützt, welche Stützstreben 20 ihrerseits an dem Querbalken 10 angeordnet sind. Dies erlaubt eine schlanke Ausführung der Achse 4 und der Seilrollen 3 und damit auch eine Gewichtseinsparung. Zwischen der mittleren Seilrolle 3 und den beiden benachbarten Seilrollen 3 befinden sich zwei Gleitelemente 11, welche über jeweils eine Achsstrebe 22 mit jeweils einer der Stützstreben 20 und damit mittelbar auch mit dem Querbalken 10 verbunden sind. Die Gleitelemente 11 sind zwischen der Achse 4 und dem Querträger 6 angeordnet und definieren zusammen mit den Seilrollen 3, den Armen 5, dem Querträger 6 und den Seilhaltern 7 eine lichte Öffnung, durch welche die gesamte Zugfolge hindurchgezogen werden kann.

Insbesondere in Fig. 3 ist gut zu erkennen, dass die Gleitelemente 11 in Zugrichtung und in Rückzugrichtung jeweils die Seilrollen 3 überragen. An der Oberseite der Gleitelemente 11 befindet sich jeweils eine Gleitfläche 21, welche in Zug- bzw. Rückzugrichtung gerundet ausgebildet ist und über welche der Hauptkörper 32 des Ziehteppiches 30 hinweggleitet. Dabei fluchtet in Höhenrichtung der höchste Punkt der Gleitflächen 21 jeweils mit den höchsten Punkten der Seilrollen 3. Gleichzeitig weisen die Gleitflächen 21 vordere und hintere Kanten auf, welche weit genug unterhalb des höchsten Punktes der Seilrollen 3 liegen, so dass ein Verkanten mit dem Hauptkörper 32 des Ziehteppiches 30 ausgeschlossen wird. Die Kufen 35, 36 des Ziehteppiches 30 sind so ausgebildet, dass sie in den Laufkerben von der mittleren Seilrolle 3 und den beiden äußeren Seilrollen 3 geführt werden.

In Fig. 5A ist ein Klappanker 50 dargestellt, welcher in der beispielhaften Zugfolge aus den Fig. 2A und 2B angeordnet sein kann. Allerdings ist die Anwendung des Klappankers 50 nicht nur auf die Aufhängung ganzer Leiterseilbündel 2 beschränkt, sondern kann sich insbesondere auch auf die Aufhängung einzelner Leiterseile 2a beziehen. So ist beispielsweise eine Zugfolge aus Leiterseil 2a, Ziehstrumpf 45, Klappanker 50 und Vorseil 43 denkbar. Ebenso ist aber auch eine Zugfolge umfassend ein einzelnes Leiterseil 2a, einen Ziehstrumpf 45, einen Klappanker 50 und ein Vorseil 43 möglich. Der Klappanker 50 weist in diesem Ausführungsbeispiel eine Verbindungseinrichtung 52 und zwei Klapparme 51 auf, welche Klapparme 51 in Fig. 5B ihre ausgeklappte Stellung erreicht haben.

Die Verbindungseinrichtung 52 umfasst zwei Verbindungselemente 53, 54, welche hier in Form von einfachen Löchern zwecks Verbindung mit Seilen ausgebildet sind. Die beiden Verbindungselemente 53, 54 definieren im Falle einer auf den Klappanker 50 einwirkenden Zugkraft eine Wirkungsrichtung, wie dies mit den Pfeilen links und rechts des Klappankers 50 in den Fig. 5A und 5B dargestellt ist. Im Falle eines Versagens eines Elementes in der Zugfolge lässt die auf den Klappanker 50 einwirkende Zugkraft schlagartig nach, wodurch die Klapparme 51 ausklappen. Hierdurch wird ein mögliches unkontrolliertes Abstürzen der Zugfolge oder eines Teils der Zugfolge verhindert, in dem sich der Klapparm 50 in den Rollenkästen 1 oder in Seillaufrädern an den Masten 41 verhakt.

Die Verbindungseinrichtung 52 umfasst ferner eine hohlzylindrische Schiene 57 sowie einen Schienenläufer 58. Der Schienenläufer 58 besteht aus einem hohlzylindrischen Schienenläuferkopf 58a, einem Anschlagkörper 62 sowie aus einem zylindrischen Längskörper 58b. Der Schienenläuferkopf 58a umschließt die Schiene 57 und ist gleitend auf dieser gelagert. Der Anschlagkörper 62 in Form eines Stiftes verläuft im Innern des Schienenläuferkopfes 58a radial und ist mit dem Schienenläuferkopf 58a fest verbunden. Mit dem Anschlagkörper 62 wiederum ist der Längskörper 58b des Schienenläufers 58 fest verbunden, wobei der Längskörper 58b gleitend in der Schiene 57 gelagert ist. Die Schiene 57 weist zwei einander gegenüberliegende Ausnehmungen 63 in Form von zwei Langlöchern auf, durch welche Ausnehmungen 63 der Anschlagkörper 62 verläuft. Die beiden Ausnehmungen 63 weisen in Wirkungsrichtung eine Ausdehnung auf, welche größer ist als der Anschlagkörper 62, so dass die beiden Ausnehmungen 63 jeweils einen ersten Anschlag 61 sowie einen zweiten Anschlag 64 aufweisen. Dabei ist der erste Anschlag 61 dem ersten Verbindungselement 53 zugewandt, wohingegen der zweite Anschlag 64 dem zweiten Verbindungselement 54 zugewandt ist.

An dem dem ersten Verbindungselement 53 zugewandten Ende 60 der Schiene 57 stößt ein Auslöser 55 mit einer Schraubenfeder 56 an. Die Schraubenfeder liegt an der Schiene 57 an und umschließt diese und ist außerdem mit ihrem anderen Ende am Schienenläuferkopf 58a befestigt. Vorteilhafterweise ist der Auslöser 55 noch von einem hier nicht dargestellten, flexiblen Gehäuse, beispielsweise in Form eines Faltenbalgs, umschlossen. Jeder Klapparm 51 umfasst eine Hauptstrebe 65 und eine Stützstrebe 66, welche über ein Drehgelenk 67 miteinander verbunden sind. Dabei ist je ein Ende der Hauptstrebe 65 und der Stützstrebe 66 über ein Drehgelenk 69 bzw. 68 mit der Schiene 57 bzw. mit dem Schienenläuferkopf 58a verbunden.

In diesem Ausführungsbeispiel ist die Schraubenfeder 56 so ausgebildet, dass sie im Falle einer nicht auf die Verbindungselemente 53, 54 einwirkenden Zugkraft den Schienenläuferkopf 58a ausweislich Fig. 5B nach rechts drückt, bis der Anschlagkörper 62 an den zweiten Anschlag 64 anschlägt. Hierdurch nähern sich die Drehgelenke 68 an die Drehgelenke 69 an, so dass die Stützstrebe 66 nach radial außen ausweicht und die Hauptstrebe 65 ausgeklappt wird.

Wirkt nun eine Zugkraft auf den Klappanker 50 über die Verbindungselemente 53 und 54, so werden der Schienenläufer 58 und die Schiene 57 auseinander gezogen. Hierdurch werden die Bewegungsrichtungen umgekehrt, bis entweder die Klapparme 51 vollständig am Schienenläuferkopf 58a anliegen oder bis der Anschlagkörper 62 an den ersten Anschlag 61 anschlägt. In diesem Ausführungsbeispiel ist der erste Anschlag 61 so ausgebildet, dass der Anschlagkörper 62 anschlägt, bevor die Klapparme 51 vollständig an dem Schienenläuferkopf 58 anliegen, um insbesondere die Drehgelenke 67, 68, 69 der Klapparme 51 zu schonen.

Der Auslöser 55 umfassend die Schraubenfeder 56 sowie den ersten Anschlag 61 sind in diesem Ausführungsbeispiel so dimensioniert, dass sich der Anschlagkörper 62 erst bei Zugkräften kleiner/gleich 3.000 N von dem ersten Anschlag 61 löst. Mit anderen Worten beginnen die Klapparme 51 erst bei einer Zugkraft kleiner/gleich 3.000 N auszuklappen, so dass dieses Ausführungsbeispiel einen Auslöseschwellwert von 3.000 N aufweist. Die Schraubfeder 56 und die Ausnehmung 63 sind so ausgelegt, dass der Anschlagkörper 62 den zweiten Anschlag 64 erst bei einer Zugkraft kleiner/gleich 1.000 N erreicht; der Klappanker 50 weist folglich einen Stoppschwellwert von 1.000 N auf, bei welchem das Ausklappen der Klapparme 51 gestoppt wird. Auslöse- und Stoppschwellwert dieses Ausführungsbeispiels sind speziell auf Zugkräfte abgestimmt, welche typischerweise bei Aufhängung von Leiterseilbündeln mittels Rollenkästen 1 auftreten. Derartige Klappanker ermöglichen eine effektive Absturzsicherung, wodurch der Absturz einer Zugfolge verlässlich vermieden werden kann.

## Patentansprüche

1. Verfahren zur Aufhängung eines Leiterseilbündels (2) oder eines einzelnen Leiterseils (2a), wobei zunächst an wenigstens einem zwischen zwei Masten (41) bereits aufgehängten Seil (8) eine Mehrzahl an Rollenkästen (1) angeordnet werden, so dass sich die Rollenkästen (1) über die Länge des bereits aufgehängten Seiles (8) zwischen den Masten (41) verteilen, wobei vorzugsweise die Rollenkästen (1) nach einem der Ansprüche 5 bis 11 entsprechen,
**dadurch gekennzeichnet, dass**
die Rollenkästen (1) an dem bereits aufgehängten Seil (8) festgeklemmt werden,
und danach das Leiterseilbündel (2) oder das einzelne Leiterseil (2a) durch die Rollenkästen (1) gezogen wird.

2. Verfahren nach Anspruch 1, wobei bei der Anordnung der Rollenkästen (1) an dem bereits aufgehängten Seil (8) ein Vorseil (43) durch die Rollenkästen (1) geführt wird, wobei vorzugsweise mit dem Vorseil (43) das Leiterseilbündel (2) und ein Ziehteppich (30) - insbesondere ein Ziehteppich (30) gemäß einem der Ansprüche 12 bis 14 - durch die Rollenkästen (1) gezogen werden.

3. Verfahren nach Anspruch 1 oder 2, wobei das Leiterseilbündel (2) oder das einzelne Leiterseil (2a) mittels einer Mehrzahl von Abstandhaltern (44) an Anknüpfpunkten (42) des bereits aufgehängten Seiles (8) befestigt wird.

4. Verfahren nach einem der Ansprüche 1 bis 3, wobei die Rollenkästen (1) und/oder die Abstandshalter (44) mit Hilfe eines Seilfahrwagens an dem bereits aufgehängten Seil (8) angeordnet bzw. festgeklemmt werden, wobei der Seilfahrwagen bevorzugt so ausgelegt ist, dass er wenigstens eine Person, vorzugsweise wenigstens zwei Personen, tragen kann.

5. Rollenkasten (1) zur Aufhängung von Leiterseilbündeln (2) oder eines einzelnen Leiterseils (2a), umfassend eine Achse (4), zwei Arme (5), einen Querträger (6) und einen Seilhalter (7) zur Halterung an einem Seil (8), wobei der Seilhalter (7) an einem Querträger (6) angeordnet ist, wobei die Achse (4) von den zwei Armen (5) gehalten wird, wobei die Arme (5) über den Querträger (6) miteinander verbunden sind,
**dadurch gekennzeichnet, dass**
wenigstens zwei Seilrollen auf der Achse (4) angeordnet sind und der lichte Abstand (D) zwischen den Seilrollen (3) und dem Querträger (6) bzw. dem Seilhalter (7) wenigstens 5 cm, vorzugsweise wenigstens 7 cm und besonders vorzugsweise wenigstens 10 cm beträgt.

6. Rollenkasten (1) nach Anspruch 5, wobei der Rollenkasten (1) einen Querbalken (10) umfasst, wobei die Achse (4) zwischen dem Querträger (6) und dem Querbalken (10) angeordnet ist und wobei vorzugsweise der Querbalken (10) die beiden Arme (5) miteinander verbindet.

7. Rollenkasten (1) nach Anspruch 5 oder 6, wobei der Rollenkasten (1) wenigstens ein Gleitelement (11) aufweist, wobei das Gleitelement (11) zwischen der Achse (4) und dem Querträger (6) angeordnet ist und wobei vorzugsweise das Gleitelement (11) die Seilrollen (3) in Zugrichtung und/oder in Rückzugrichtung überragt.

8. Rollenkasten (1) nach einem der Ansprüche 5 bis 7, wobei der Rollenkasten (1) eine Schließvorrichtung (9) zum Öffnen und Schließen des Rollenkastens (1) aufweist, so dass vorzugsweise die Achse (4), die Arme (5) und der Querträger (6) ein von dem Seilhalter (7) gehaltenes Seil bzw. ein von einer der Seilrollen (3) geführtes Seil umschließen können.

9. Rollenkasten (1), nach einem der Ansprüche 5 bis 8, wobei der Querträger (6) ein Profil ist und vorzugsweise wenigstens eine Nut (23) auf einer der Achsen (4) zugewandten Fläche aufweist.

10. Rollenkasten (1) nach einem der Ansprüche 5 bis 9, wobei der Rollenkasten (1) in Bezug zur Zug- bzw. Rückzugrichtung symmetrisch ausgebildet ist.

11. Rollenkasten (1) nach einem der Ansprüche 5 bis 10, wobei das Verhältnis des Außendurchmessers (AD) zu dem Randabstand (RA) der Seilrollen (3) wenigstens 1, bevorzugt wenigstens 1,5 und höchstens 6, bevorzugt höchstens 4, beträgt.

12. Ziehteppich (30) zum Ziehen eines Leiterseilbündels (2), wobei der Ziehteppich (30) einen Hauptkörper (32) aufweist, wobei der Hauptkörper (32) eine Rückseite (34) aufweist, welche Rückseite (34) dem Leiterseilbündel (2) zugeordnet ist, wobei der Hauptkörper (32) eine von der Rückseite (34) abgewandte Vorderseite (33) aufweist,
**dadurch gekennzeichnet, dass**
der Hauptkörper (32) an seiner Unterseite wenigstens eine Kufe (35, 36) aufweist, wobei die Kufe (35, 36) an ihrem vorderseitigen Ende und/oder an ihrem rückseitigen Ende eine Schräge (37) bzw. Rundung aufweist.

13. Ziehteppich (30) nach Anspruch 12, wobei wenigstens drei Kufen (35, 36) an der Unterseite des Hauptkörpers (32) angeordnet sind.

14. Ziehteppich (3) nach Anspruch 12 oder 13, wobei der Ziehteppich (30) einen Klappanker (50), insbesondere einen Klappanker (50) nach einem der Ansprüche 16 bis 25, umfasst, wobei der Klappanker (50) wenigstens einen Klapparm (51) umfasst, wobei der Klappanker (50) so ausgebildet ist, dass der Klapparm (51) beginnt auszuklappen, wenn eine auf den Klappanker (51) einwirkende Zugkraft einen Auslöseschwellwert unterschreitet.

15. System, umfassend wenigstens einen Rollenkasten (1), insbesondere einen Rollenkasten (1), gemäß einem der Ansprüche 5 bis 11, und umfassend einen Ziehteppich (30), insbesondere einen Ziehteppich (30) gemäß einem der Ansprüche 12 bis 14, wobei der Rollenkasten (1) wenigstens zwei Seilrollen (3) auf einer Achse (4) umfasst, wobei der Ziehteppich (30) wenigstens eine Kufe (35, 36) aufweist,
**dadurch gekennzeichnet, dass**
die Kufe (35, 36) so ausgebildet ist, dass sie von einer der Seilrollen (3) aufgenommen werden kann, so dass der Ziehteppich (30) in Zugrichtung - und vorzugsweise auch in Rückzugrichtung - den Rollenkasten (1) passieren kann.

## Geänderte Patentansprüche

### Geänderte Patentansprüche gemäss Regel 137(2) EPÜ.

1. Verfahren zur Aufhängung eines Leiterseilbündels (2) oder eines einzelnen Leiterseils (2a), wobei zunächst an wenigstens einem zwischen zwei Masten (41) bereits aufgehängten Seil (8) eine Mehrzahl an Rollenkästen (1) angeordnet werden, so dass sich die Rollenkästen (1) über die Länge des bereits aufgehängten Seiles (8) zwischen den Masten (41) verteilen, wobei vorzugsweise die Rollenkästen (1) nach einem der Ansprüche 5 bis 11 entsprechen,
**dadurch gekennzeichnet, dass**
die Rollenkästen (1) an dem bereits aufgehängten Seil (8) festgeklemmt werden und danach das Leiterseilbündel (2) oder das einzelne Leiterseil (2a) durch die Rollenkästen (1) gezogen wird,
wobei bei der Anordnung der Rollenkästen (1) an dem bereits aufgehängten Seil (8) ein Vorseil (43) durch die Rollenkästen (1) geführt wird, wobei mit dem Vorseil (43) das Leiterseilbündel (2) und ein Ziehteppich (30) durch die Rollenkästen (1) gezogen werden.

2. Verfahren nach Anspruch 1, wobei das Leiterseilbündel (2) oder das einzelne Leiterseil (2a) mittels einer Mehrzahl von Abstandhaltern (44) an Anknüpfpunkten (42) des bereits aufgehängten Seiles (8) befestigt wird.

3. Verfahren nach einem der Ansprüche 1 oder 2, wobei die Rollenkästen (1) und/oder die Abstandshalter (44) mit Hilfe eines Seilfahrwagens an dem bereits aufgehängten Seil (8) angeordnet bzw. festgeklemmt werden, wobei der Seilfahrwagen bevorzugt so ausgelegt ist, dass er wenigstens eine Person, vorzugsweise wenigstens zwei Personen, tragen kann.

4. Rollenkasten (1) zur Aufhängung von Leiterseilbündeln (2) oder eines einzelnen Leiterseils (2a), umfassend eine Achse (4), zwei Arme (5), einen Querträger (6) und einen Seilhalter (7) zur Halterung an einem Seil (8), wobei der Seilhalter (7) an einem Querträger (6) angeordnet ist, wobei die Achse (4) von den zwei Armen (5) gehalten wird, wobei wenigstens zwei Seilrollen auf der Achse (4) angeordnet sind,
**dadurch gekennzeichnet, dass**
die Arme (5) über den Querträger (6) miteinander verbunden sind, der lichte Abstand (D) zwischen den Seilrollen (3) und dem Querträger (6) bzw. dem Seilhalter (7) wenigstens 5 cm beträgt und
der Seilhalter (7) eine Seilklemme ist.

5. Rollenkasten (1) nach Anspruch 4, wobei der Rollenkasten (1) einen Querbalken (10) umfasst, wobei die Achse (4) zwischen dem Querträger (6) und dem Querbalken (10) angeordnet ist und wobei vorzugsweise der Querbalken (10) die beiden Arme (5) miteinander verbindet.

6. Rollenkasten (1) nach Anspruch 4 oder 5, wobei der Rollenkasten (1) wenigstens ein Gleitelement (11) aufweist, wobei das Gleitelement (11) zwischen der Achse (4) und dem Querträger (6) angeordnet ist und wobei vorzugsweise das Gleitelement (11) die Seilrollen (3) in Zugrichtung und/oder in Rückzugrichtung überragt.

7. Rollenkasten (1) nach einem der Ansprüche 4 bis 6, wobei der Rollenkasten (1) eine Schließvorrichtung (9) zum Öffnen und Schließen des Rollenkastens (1) aufweist, so dass vorzugsweise die Achse (4), die Arme (5) und der Querträger (6) ein von dem Seilhalter (7) gehaltenes Seil bzw. ein von einer der Seilrollen (3) geführtes Seil umschließen können.

8. Rollenkasten (1), nach einem der Ansprüche 4 bis 7, wobei der Querträger (6) ein Profil ist und vorzugsweise wenigstens eine Nut (23) auf einer der Achsen (4) zugewandten Fläche aufweist.

9. Rollenkasten (1) nach einem der Ansprüche 4 bis 8, wobei der Rollenkasten (1) in Bezug zur Zug- bzw. Rückzugrichtung symmetrisch ausgebildet ist.

10. Rollenkasten (1) nach einem der Ansprüche 4 bis 9, wobei das Verhältnis des Außendurchmessers (AD) zu dem Randabstand (RA) der Seilrollen (3) wenigstens 1, bevorzugt wenigstens 1,5 und höchstens 6, bevorzugt höchstens 4, beträgt.

11. Ziehteppich (30) zum Ziehen eines Leiterseilbündels (2), wobei der Ziehteppich (30) einen Hauptkörper (32) aufweist, wobei der Hauptkörper (32) eine Rückseite (34) aufweist, welche Rückseite (34) dem Leiterseilbündel (2) zugeordnet ist, wobei der Hauptkörper (32) eine von der Rückseite (34) abgewandte Vorderseite (33) aufweist, wobei der Hauptkörper (32) an seiner Unterseite wenigstens eine Kufe (35, 36) aufweist,
**dadurch gekennzeichnet, dass**
die Kufe (35, 36) an ihrem vorderseitigen Ende und/oder an ihrem rückseitigen Ende eine Schräge (37) bzw. Rundung aufweist und dass
wenigstens ein rückseitiges Anschlusseil (47, 48) der Rückseite des Hauptkörpers (32) zugeordnet ist, wobei der Hauptkörper (32) wenigstens eine Umlenkrolle (38 39) aufweist, über welche das rückseitige Anschlussseil (47, 48) gelegt ist.

12. Ziehteppich (30) nach Anspruch 11, wobei wenigstens drei Kufen (35, 36) an der Unterseite des Hauptkörpers (32) angeordnet sind.

13. Ziehteppich (3) nach Anspruch 11 oder 12, wobei der Ziehteppich (30) einen Klappanker (50) umfasst, wobei der Klappanker (50) wenigstens einen Klapparm (51) umfasst, wobei der Klappanker (50) so ausgebildet ist, dass der Klapparm (51) beginnt auszuklappen, wenn eine auf den Klappanker (51) einwirkende Zugkraft einen Auslöseschwellwert unterschreitet.

14. System, umfassend wenigstens einen Rollenkasten (1), insbesondere einen Rollenkasten (1), gemäß einem der Ansprüche 5 bis 11, und umfassend einen Ziehteppich (30), insbesondere einen Ziehteppich (30) gemäß einem der Ansprüche 12 bis 14, wobei der Rollenkasten (1) wenigstens zwei Seilrollen (3) auf einer Achse (4) umfasst, wobei der Ziehteppich (30) wenigstens eine Kufe (35, 36) aufweist,
**dadurch gekennzeichnet, dass**
die Kufe (35, 36) so ausgebildet ist, dass sie von einer der Seilrollen (3) aufgenommen werden kann, so dass der Ziehteppich (30) in Zugrichtung - und vorzugsweise auch in Rückzugrichtung - den Rollenkasten (1) passieren kann, wobei der Rollenkasten (1) einen Seilhalter (7) aufweist, wobei der Seilhalter (7) eine Seilklemme ist.
